(19) Europäisches Patentamt
European Patent Office
Office européen des brevets

(11) **EP 2 785 553 B1**

(12) **FASCICULE DE BREVET EUROPEEN**

(45) Date de publication et mention
de la délivrance du brevet:
**21.07.2021 Bulletin 2021/29**

(21) Numéro de dépôt: **12795796.7**

(22) Date de dépôt: **30.11.2012**

(51) Int Cl.:
**B60L 58/12** *(2019.01)*     **B60W 10/08** *(2006.01)*
**B60W 20/12** *(2016.01)*

(86) Numéro de dépôt international:
**PCT/EP2012/074153**

(87) Numéro de publication internationale:
**WO 2013/079694 (06.06.2013 Gazette 2013/23)**

(54) **PROCEDE D'ESTIMATION DE LA CONSOMMATON ENERGETIQUE D'UN VEHICULE AUTOMOBILE**

VERFAHREN ZUR BESTIMMUNG DES ENERGIEVERBRAUCHS EINES KRAFTFAHRZEUGS

METHOD FOR ESTIMATING THE ENERGY CONSUMPTION OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.12.2011 FR 1161110**

(43) Date de publication de la demande:
**08.10.2014 Bulletin 2014/41**

(73) Titulaire: **Renault S.A.S.**
**92100 Boulogne-Billancourt (FR)**

(72) Inventeurs:
• **GRANATO, Giovanni**
**F-92170 Vanves (FR)**
• **BONNANS, Frédéric**
**F-78180 Montigny-le-Bretonneux (FR)**

(56) Documents cités:
**DE-A1-102007 059 120    US-A1- 2009 212 994**

• **WIKIPEDIA: "ARMA-Modell", INTERNET CITATION, 21 octobre 2011 (2011-10-21), pages 1-4, XP007921093, Extrait de l'Internet: URL:http://de.wikipedia.org/w/index.php?title=ARMA-Modell&oldid=950 [extrait le 2012-09-27]**
• **None**

EP 2 785 553 B1

**Description**

La présente invention a pour objet un procédé d'estimation de la consommation énergétique d'un véhicule automobile.

Dans le contexte de l'estimation de l'autonomie kilométrique d'un véhicule automobile, il apparaît nécessaire de pouvoir prédire de façon fiable la consommation énergétique du véhicule pendant un trajet donné.

La consommation énergétique peut désigner une consommation électrique et/ou une consommation en carburant. Dans le cas d'un véhicule électrique par exemple, il peut s'agir de la quantité de charge restant dans la batterie, couramment appelée State of Charge (SOC) en langue anglaise.

La consommation énergétique peut dépendre de plusieurs facteurs. Un premier problème est d'identifier les facteurs qui contribuent le plus à la consommation. Par exemple, il est connu que pour un véhicule à moteur Diesel, l'accélération du véhicule à partir d'un arrêt, la conduite avec des rapports de vitesse peu élevés, des accélérations trop brusques, ou encore rouler en basse vitesse sont des facteurs qui ont une influence importante dans la consommation de carburant.

Une solution connue pour déterminer la consommation énergétique consiste à créer un modèle numérique très fin du moteur qui s'approche au mieux des connaissances empiriques. Pourtant, même si l'on dispose d'un tel modèle, le comportement du conducteur n'est pas pris en considération.

On connait également le document DE102007059120 qui décrit une méthode de détermination d'un itinéraire prenant en considération la consommation énergétique.

La présente invention vise à remédier à ces inconvénients.

Elle propose un propose un procédé d'estimation de la consommation énergétique d'un véhicule qui prend en compte le comportement du conducteur et qui est à la fois simple et fiable.

L'invention a ainsi pour objet un procédé d'estimation de la consommation énergétique d'un véhicule automobile pendant un trajet donné.

L'invention est définie dans la revendication indépendante 1.

L'étape de découpage du trajet en portions de trajet, l'étape d'attribution d'une vitesse de consigne à chaque portion de trajet et l'établissement d'un comportement de conduite prédéterminé peuvent être fournis par le système de navigation du véhicule.

Le modèle ARMA (modèle autorégressif à moyenne mobile) peut évoluer en temps réel en fonction du comportement du conducteur.

La ou les caractéristiques de la portion de trajet peuvent être le type de trajet, la longueur du trajet, le nombre de feux de signalisation, le nombre de carrefours.

Les valeurs estimées de l'évolution de la vitesse du véhicule peuvent être filtrées à l'aide d'un filtre passe-bas.

La consommation énergétique peut être une consommation électrique et/ou une consommation en carburant.

D'autres caractéristiques et avantages de la présente invention apparaîtront plus clairement à la lecture de la description suivante donnée à titre d'exemple illustratif et non limitatif d'un procédé selon l'invention, la description étant faite en référence aux dessins annexés sur lesquels :

- la figure 1 est un diagramme utile à la compréhension du procédé, et
- la figure 2 est un diagramme comparatif entre des évolutions de vitesses estimées à l'aide du procédé et une évolution de vitesse mesurée.

Le procédé selon l'invention permet de prendre en compte les facteurs liés au style de conduite du conducteur et les facteurs liés aux caractéristiques du trajet à parcourir. Le procédé peut permettre en particulier la prise en compte de ces facteurs à travers deux informations : des données de roulages passés du conducteur et des informations sur le trajet provenant du système de navigation du véhicule (appelé NAV).

On génère un profil de vitesses (des valeurs de vitesses en fonction de la position du véhicule dans chaque point du parcours) pour un trajet donné, par exemple en fonction du type de route associé à chacune des portions. A partir de ce profil de vitesses, on met en œuvre un modèle de batterie assez simple qui permet de décrire par exemple l'évolution du SOC en connaissant la vitesse du véhicule et l'accélération.

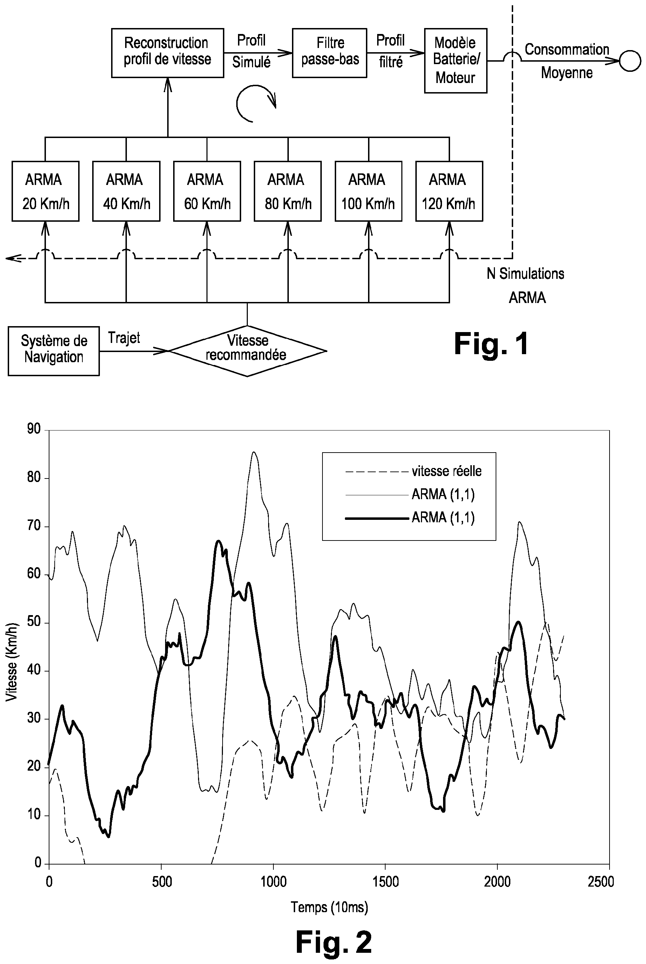

Un exemple d'une telle génération de ce profil est schématisé à la figure 1. On procède aux étapes suivantes :

1) Le conducteur saisit une destination dans la NAV. La NAV lui fournit un trajet allant à cette destination. Dans la NAV, ce trajet est découpé en segments de route auxquels sont associés des paramètres tels que par exemple le type de route, une vitesse suggérée, la longueur du segment, l'indication selon laquelle il comporte un feu ou un carrefour.

2) Avec cette information, on utilise alors des modèles autorégressifs à moyenne mobile (modèles ARMA) qui permettent de générer un profil de vitesse qui tient compte/ prend en compte les caractéristiques propres au style de conduite (accélération franche/ déplacement rapide de la pédale d'accélérateur, rapport long/ court, paramètres influant sur la consommation énergétque) du conducteur. Les modèles ARMA sont des modèles stochastiques, c'est-à-dire qu'ils génèrent de façon aléatoire un profil de vitesse. Ainsi, si l'on génère deux profils de vitesse avec un même modèle ARMA, ces profils seront différents. Le modèle est composé de deux parties :

une partie autorégressive (AR) et une partie moyenne-mobile (MA). Le modèle est généralement noté ARMA(p,q), où p est l'ordre de la partie AR et q l'ordre de la partie MA.

La figure 2 illustre deux profils de vitesse générés par le même modèle ARMA pour le même trajet et le profil de la vitesse réelle mesurée.

3) Le profil de vitesse est filtré avec un filtre passe-bas afin d'exclure les accélérations qui ne sont pas réalistes.

4) Une fois le profil de vitesse filtré, il est possible d'appliquer le modèle d'évolution du SOC pour calculer la quantité de charge que le conducteur aurait consommé s'il avait suivi exactement ce profil de vitesse (aux erreurs du modèle de batterie près).

5) Les étapes 2, 3 et 4 sont répétées un grand nombre N de fois (200 fois par exemple) afin d'obtenir une valeur moyenne de consommation de SOC, ainsi qu'un écart-type associé.

Le procédé peut en particulier comprendre les étapes suivantes :

- saisie d'une destination dans la navigation,
- génération d'un trajet par la navigation,
- envoi des données du trajet au serveur débarqué,
- segmentation du parcours par le serveur débarqué et caractérisation de ces segments,
- génération (calcul) des profils de vitesse de chacun des segments selon l'un des modèles ARMA implanté dans la mémoire,
- filtration des résultats à l'aide d'un filtre basse bas,
- association de chacune des vitesses estimées par le modèle ARMA au SOC, et
- répétition des trois dernières étapes.

La suite de la description est consacrée au détail de la méthode de construction des modèles ARMA.
Les modèles ARMA sont des modèles classiques qui modélisent les termes futurs d'une série temporelle comme étant une combinaison linéaire de termes passés plus une innovation aléatoire.
Notons $y\_t$ la vitesse véhicule à l'instant $t$. On peut imaginer que, étant donné la vitesse $y\_t$, la vitesse du véhicule dans le prochain instant $t+1$ est prédite par la valeur antérieure de vitesse plus un terme aléatoire :

$$y_{t+1} = ay_t + be_{t+1}$$

où $a$ et $b$ sont des constantes réelles et le terme $e\_t+1$ est une variable aléatoire dite d'innovation, autrement dit, un bruit blanc strict, c'est-à-dire, de moyenne nulle et de variance unitaire.
Il s'agit ici d'un modèle ARMA(1,1). Plus généralement, un modèle ARMA(p,q) considère que la vitesse à $y\_t+1$ est une combinaison linéaire des p dernières vitesses et de q termes d'innovation :

$$y_{t+1} = \sum_{i=1}^{p} a_i y_{t-i} + \sum_{j=1}^{q} b_j e_{t-j+1}$$

Dans la suite, on utilise le modèle ARMA(1,1) pour expliquer la procédure d'identification des coefficients a et b, celle-ci étant facilement étendue pour identifier les coefficients $a\_0, a\_1,...,a\_p$ et $b\_0, ..., b\_q$.
Pour l'identification du modèle ARMA(1,1), on dispose d'une base de données avec une suite de valeurs $Y\_n=(y\_1, y\_2,...,y\_n)$. Ces valeurs correspondent à des valeurs de vitesses du conducteur enregistrées au préalable.
On peut faire en sorte que cette série $Y\_n$ soit centrée, c'est-à-dire de moyenne nulle. Ainsi :

$$Var(y_{t+1}) = E(y_{t+1}^2) = \sigma^2 = a^2\sigma^2 + b^2$$

où les fonctions $E(.)$ et $Var(.)$ désignent respectivement l'espérance et la variance des variables.
Il en découle que :

$$b^2 = \sigma^2(1-a^2)$$

On doit vérifier la condition $|a| < 1$ pour assurer la stabilité du modèle. D'autre part :

$$\gamma(1) = E(y_t y_{t+1}) = aE(y_t^2) = a\sigma^2$$

et donc :

$$a = \frac{\gamma(1)}{\sigma^2}$$

Les valeurs de $\sigma^2$ et $y(1)$ peuvent être estimées à travers les valeurs $Y\_n$. On obtient ainsi les valeurs de a et b.
L'identification d'un modèle ARMA par les données historiques d'un conducteur (ou bien une classe de conducteurs, ou les conducteurs d'un certain véhicule) procure l'essentiel de l'information sur son style de conduite.
Les caractéristiques de la route influent également sur la consommation. C'est pourquoi on peut identifier plusieurs modèles ARMA, chaque modèle étant associé à un ensemble de caractéristiques du segment de route. Dans notre cas, on peut utiliser la vitesse suggérée par la NAV au conducteur. De fait, la NAV peut proposer six valeurs de vitesse différentes au conducteur : 20, 40, 60, 80, 100 et 120 km/h.
Comme chaque segment du parcours est associé à l'une de ces valeurs, on peut identifier six modèles ARMA différents : ARMA20, ARMA40, ARMA60, ARMA80, ARMA100 et ARMA120. Chaque modèle ARMA utilise pour l'identification de ses coefficients un sous-ensemble de l'historique de données de vitesse. Par exemple, le sous-ensemble $Y\_n^{20}$ contient toutes les valeurs de vitesse qui ont été obtenues lorsque le conducteur passait par un segment associé à une vitesse suggérée de 20 km/h. Il y est de même pour les autres modèles.

Le procédé selon l'invention est particulièrement fiable. Pour un trajet d'environ 27.4 km, le SOC est estimé avec une précision moyenne de 1.8% de la valeur obtenue avec les vitesses mesurées. On constate également que lorsqu'on augmente l'ordre des modèles ARMA, il y a une augmentation de la performance : pour les modèles ARMA(1,2) et ARMA(2,1) testés, l'écart avec la valeur finale du SOC ne dépasse pas 1.7%.

Il est possible d'utiliser des modèles ARMA d'ordre plus élevé. De fait, une augmentation de l'ordre du modèle ne ralentit pas l'étape de simulation. C'est l'étape d'identification des modèles qui s'avère plus coûteuse. Or, cette étape se faisant hors-ligne, il peut être avantageux d'utiliser des modèles avec un ordre plus élevé.

Un grand nombre de simulations peut être nécessaire afin de s'assurer de la pertinence des résultats. Ce nombre de simulations avant de pouvoir afficher une estimation de la consommation fiable dépend du style de conduite du conducteur. Si le style de conduite est plus régulier, les modèles ARMA seront plus représentatifs, pour un même nombre de simulations.

On peut également imaginer l'intégration de paramètres exogènes autres que la vitesse recommandée par la NAV, comme par exemple les conditions météorologiques ou les conditions du trafic.

Le procédé selon l'invention est utilisé pour prédire la consommation énergétique du véhicule sur un trajet donnée. Cette consommation estimée peut être utilisée, par exemple, pour estimer l'autonomie du véhicule. On peut ainsi peut prévoir des circuits vers de points de recharges si cela s'avère nécessaire.

Les moyens pour mettre en œuvre le procédé selon l'invention peuvent comprendre :

- un véhicule équipé de :

    - une navigation,
    - un module de communication,
    - un réseau mettant en liaison la navigation et le module de communication, et
    - un module de détermination du niveau de charge du réservoir de carburant ou électricité,

- un serveur déporté ou débarqué comprenant :

    - des moyens de calcul,
    - des moyens de mémorisation, et

        - un module de communication.

## Revendications

1. Procédé d'estimation de la consommation énergétique d'un véhicule automobile pendant un trajet donné, comprenant les étapes suivantes :

    a) une étape de découpage du trajet en portions de trajet,
    b) une étape d'attribution d'une vitesse de consigne à chaque portion de trajet, en fonction d'au moins une caractéristique de ladite portion,
    c) une étape d'estimation, pour chaque portion de trajet, de l'évolution de la vitesse du véhicule en fonction du temps, la vitesse étant estimée en fonction d'au moins une caractéristique de la portion de trajet et en fonction d'un comportement de conduite prédéterminé associé à la vitesse de consigne de ladite portion, de manière à établir pour l'ensemble du trajet une estimation de l'évolution de la vitesse du véhicule en fonction du temps,
    d) une étape d'estimation de la consommation énergétique du véhicule pendant le trajet, en fonction de l'évolution de la vitesse estimée

    **caractérisé en ce que** l'étape d'estimation de l'évolution de la vitesse du véhicule en fonction du temps est réalisée à l'aide d'un modèle autorégressif à moyenne mobile et est obtenue en faisant la moyenne de plusieurs estimations.

2. Procédé selon la revendication 1, **caractérisé en ce que** l'étape de découpage du trajet en portions de trajet, l'étape d'attribution d'une vitesse de consigne à chaque portion de trajet et l'établissement d'un comportement de conduite prédéterminé sont fournis par le système de navigation du véhicule.

3. Procédé selon l'une quelconque des revendications précédentes, **caractérisé en ce que** le modèle autorégressif à moyenne mobile évolue en temps réel en fonction du comportement du conducteur.

4. Procédé selon l'une des revendications 1 à 3, **caractérisé en ce que** la ou les caractéristiques de la portion de trajet sont le type de trajet, la longueur du trajet, le nombre de feux de signalisation, le nombre de carrefours.

5. Procédé selon l'une des revendications 1 à 4, **caractérisé en ce que** les valeurs estimées de l'évolution de la vitesse du véhicule sont filtrées à l'aide d'un filtre passe-bas.

6. Procédé selon l'une des revendications 1 à 5, **caractérisé en ce que** la consommation énergétique est une consommation électrique et/ou une consommation en carburant.

**Patentansprüche**

1. Verfahren zum Schätzen des Energieverbrauchs eines Kraftfahrzeugs während einer gegebenen Fahrstrecke, das die folgenden Schritte enthält:

   a) einen Schritt der Aufgliederung der Fahrstrecke in Fahrstreckenabschnitte,
   b) einen Schritt der Zuweisung einer Sollgeschwindigkeit zu jedem Fahrstreckenabschnitt, abhängig von mindestens einem Merkmal des Abschnitts,
   c) einen Schritt der Schätzung, für jeden Fahrstreckenabschnitt, der zeitabhängigen Entwicklung der Geschwindigkeit des Fahrzeugs, wobei die Geschwindigkeit abhängig von mindestens einem Merkmal des Fahrstreckenabschnitts und abhängig von einem der Sollgeschwindigkeit des Abschnitts zugeordneten vorbestimmten Fahrverhalten geschätzt wird, um eine Schätzung der zeitabhängigen Entwicklung der Geschwindigkeit des Fahrzeugs für die Gesamtheit der Fahrstrecke zu erstellen,
   d) einen Schritt der Schätzung des Energieverbrauchs des Fahrzeugs während der Fahrstrecke, abhängig von der geschätzten Entwicklung der Geschwindigkeit,

   **dadurch gekennzeichnet, dass** der Schritt der Schätzung der zeitabhängigen Entwicklung der Geschwindigkeit des Fahrzeugs mit Hilfe eines autoregressiven Modells mit gleitendem Mittelwert durchgeführt und durch Mitteln mehrerer Schätzungen erhalten wird.

2. Verfahren nach Anspruch 1, **dadurch gekennzeichnet, dass** der Schritt der Aufgliederung der Fahrstrecke in Fahrstreckenabschnitte, der Schritt der Zuweisung einer Sollgeschwindigkeit zu jedem Fahrstreckenabschnitt und die Erstellung eines vorbestimmten Fahrverhaltens vom Navigationssystem des Fahrzeugs geliefert werden.

3. Verfahren nach einem der vorhergehenden Ansprüche, **dadurch gekennzeichnet, dass** das autoregressive Modell mit gleitendem Mittelwert sich in Echtzeit abhängig vom Verhalten des Fahrers entwickelt.

4. Verfahren nach einem der Ansprüche 1 bis 3, **dadurch gekennzeichnet, dass** das oder die Merkmale des Fahrstreckenabschnitts die Art der Fahrstrecke, die Länge der Fahrstrecke, die Anzahl von Verkehrsampeln, die Anzahl von Straßenkreuzungen sind.

5. Verfahren nach einem der Ansprüche 1 bis 4, **dadurch gekennzeichnet, dass** die geschätzten Werte der Entwicklung der Geschwindigkeit des Fahrzeugs mit Hilfe eines Tiefpassfilters gefiltert werden.

6. Verfahren nach einem der Ansprüche 1 bis 5, **dadurch gekennzeichnet, dass** der Energieverbrauch ein Stromverbrauch und/oder ein Kraftstoffverbrauch ist.

**Claims**

1. Method for estimating the energy consumption of a motor vehicle over a given route, comprising the following steps:

   a) a step for splitting the route into route portions,
   b) a step for allocating a set speed to each route portion, as a function of at least one characteristic of said portion,
   c) a step for estimating, for each route portion, the change in speed of the vehicle as a function of time, the speed being estimated as a function of at least one characteristic of the route portion and as a function of a predetermined driving behaviour associated with the set speed of said portion, so as to establish for the whole of the route an estimate of the change in speed of the vehicle as a function of time,
   d) a step for estimating the energy consumption of the vehicle over the route, as a function of the change in the estimated speed,

   **characterized in that** the step for estimating the change in speed of the vehicle as a function of time is carried out using an autoregressive-moving-average model and is obtained by working out the average of several estimates.

2. Method according to Claim 1, **characterized in that** the step for splitting the route into route portions, the step for allocating a set speed to each route portion and the establishment of a predetermined driving behaviour are provided by the navigation system of the vehicle.

3. Method according to either one of the preceding claims, **characterized in that** the autoregressive-moving-average model changes in real time as a function of the behaviour of the driver.

4. Method according to one of Claims 1 to 3, **characterized in that** the characteristic or characteristics of the route portion are the type of route, the length of the route, the number of traffic lights and the number of junctions.

5. Method according to one of Claims 1 to 4, **characterized in that** the estimated values of the change in speed of the vehicle are filtered using a low-pass filter.

6. Method according to one of Claims 1 to 5, **characterized in that** the energy consumption is an electrical consumption and/or a fuel consumption.

**Fig. 1**

**Fig. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   DE 102007059120